Europäisches Patentamt

European Patent Office

Office européen des brevets

(11) Publication number: **0 157 745**
**B1**

# (12) EUROPEAN PATENT SPECIFICATION

(45) Date of publication of patent specification: **18.01.89**

(21) Application number: **85850062.2**

(22) Date of filing: **27.02.85**

(51) Int. Cl.⁴: **G 05 D 23/24, F 24 D 19/10**

(54) Temperature control arrangement for heating systems.

(30) Priority: **02.03.84 SE 8401173**

(43) Date of publication of application:
**09.10.85 Bulletin 85/41**

(45) Publication of the grant of the patent:
**18.01.89 Bulletin 89/03**

(84) Designated Contracting States:
**AT BE CH DE FR GB IT LI NL SE**

(56) References cited:
**EP-A-0 049 215**
**EP-A-0 070 414**
**EP-A-0 070 471**
**DD-A- 152 617**
**DE-A-3 328 189**
**DE-A-3 328 190**

(73) Proprietor: **TOUR & ANDERSSON AKTIEBOLAG**
**Svärdlangsvägen 46 Johanneshov**
**S-121 72 Stockholm (SE)**

(72) Inventor: **Strand, Rolf Erik**
**Vastergardsvagen 46**
**Huddinge (SE)**
Inventor: **Persson, Per-Lennart**
**Ringvägen 5 A**
**Tyresö (SE)**

(74) Representative: **Siebmanns, Hubertus et al**
**Götalands Patentbyra AB Box 154**
**S-561 22 Huskvarna (SE)**

Courier Press, Leamington Spa, England.

## Description

The present invention regards a temperature control arrangement in heating systems, which have for their purpose to keep a constant temperature in localities, e.g. living houses.

In such heating systems, due to the power crisis, one has found it desirable to take steps in order to decrease the consumption of fuel or power for the heating. One such step has been to keep a continuous stream or feed of heat transfer medium. If, as is usually the case, the heating takes place by means of heat radiators, fed with warm water and placed in the locality spaces concerned, thus, the warm water is fed to these radiators which will give off heat to the space inside of the localities for compensation of the loss of heat which may perhaps exist. Here, thus, we have immediately two temperatures of importance to the control of the system, viz. the internal temperature $t_i$ in the space and the temperature $t_w$ of the heat transfer medium which is, in this case, the warm water fed to the heat radiators.

Usually, a reference value $t_r$ is stipulated for the internal temperature $t_i$, representing the desired internal temperature. In practice, however, the internal temperature $t_i$ will not exactly agree with this desired or reference temperature $t_r$, because the temperature $t_i$ inside of the locality will be subject of a tendency to change, thus getting warmer or cooler, due to different circumstances. Most important among these circumstances, usually, is the outdoor temperature $t_u$, i.e. the temperature of the outdoor air because the lower this temperature is, the quicker will the air in the locality concerned be cooled, and the higher the outdoor temperature is the more slowly will said cooling be.

There is a rather complicated relation between the said four temperatures $t_i$, $t_u$, $t_w$ and $t_r$, but this is further complicated by different circumstances. Amongst such circumstances may be mentioned the following ones:

At strong wind pressure on the outside wall of the locality controlled as to its temperature a quicker cooling will take place due to the increased convection. At strong moisture of the outdoor air, also, the cooling will take place quicker. If, on the contrary, there is sun shine, then a given heating will take place due to radiation, and if a greater number of persons are collected in the locality or if a power consuming machine is running in the locality concerned, then, also, heating will take place by convection.

An especially sensed difficulty in systems of the above mentioned type will appear in such buildings in which there has been provided a plurality of flats or, with other words, in multy family houses. Thus, it is not known where one should place the sensor means for the internal temperature $t_i$. If this is provided in a flat where the inhabitants want a lower temperature and provide this by opening windows to the surrounding outdoor cold atmosphere, then the indicated interior temperature $t_i$ will be rather low simultaneously as the temperature rises in other flats contrary to what people may want, living in these other flats and wanting, perhaps, a more conventional room temperature.

The sensing means for the internal temperature $t_i$, therefore, should be applied in some place which may be regarded representative for all of the building. Thus, it is not suitable to apply these means only in one single flat in a multy family house because, in this way, the state in this flat will dominate the state in the remaining flats in a non-desirable way. In some cases, one may apply these means in some place, common to all of the flats such as in a stair case, but also this is not perfect because, rather often, the temperature in a stair case is lower than in the flats proper and, further, it may vary rather irregularily.

One possible solution of this problem would be to provide a sensor for the internal temperature $t_i$ in each of a plurality of flats, preferably rather differently situated and, thereby, having different conditions for the internal temperature and to transfer the readings to an apparatus, which will construct the mean value of them and to introduce this mean value into the arrangement according to the present invention as an expression for the interior temperature $t_i$.

Another complication occurs if one should in the way which is usual nowadays adjust the reference temperature $t_r$ to a higher value at day time and to a lower value during night hours. It has even been proposed to use still more reference temperatures, viz. in addition to the two ones mentioned also a morning and/or an evening temperature.

The strongest sensed disadvantage will, due to the said circumstances exist in multy family houses but also in one family houses the known arrangements are not completely satisfactory. It has happened, in one family houses, see for instance the European patent application EP—A—00 80 801, that one provided temperature sensors both for the internal temperature $t_i$ and for the outdoor temperature $t_u$ and controlled the room temperature into close agreement with a reference temperature under influence from both the interior temperature $t_i$ and the outdoor temperature $t_u$, but the arrangements for this purpose have been extremely complicated. And, in mutly family houses one could by said means not at all take into regard the interior temperature $t_i$ because it was impossible to decide where it should be sensed.

An investigation has proved that a direct control of the interior temperature $t_i$ which means sensing this temperature and, if it would show a tendency of change, to increase or decrease, respectively, the feed of heat, would scarcely be possible for the reasons mentioned above. Instead, the temperature control should take place mainly in basis of the outdoor temperature $t_u$. Nevertheless however, one could allow the interior temperature $t_i$ to influence to some extent and in an indirect way, the function indicating the relation between the outdoor temperature $t_u$ and the temperature $t_w$ of the medium by means of which a compensation is created for the difference between the reference temperature $t_r$ and the interior temperature $t_i$. The temperature $t_w$ of said medium, in the following, will be called, "the correction means temperature".

In such a control, therefore, it is necessary to know the functional relation between the internal temperature $t_i$ and the outdoor temperature $t_u$. This can be calculated according to known technics but such a calculation often is not too relable, and a better way, therefore will usually be to base the said knowledge about the relation on empirical experiments. Said relationship, of course, will be different for different buildings.

Investigations forming basis of the present invention, however have proved, not only that this function, as mentioned above, is very different for different buildings but also that it is in practically all cases represented by a very complicated function which, if expressed in the shape of a mathematical equation, would be of higher degree, and, if expressed in the shape of a curve or graph, the said graph would be curved in a shape, comprising in many a case at least one inflection point and in many a case two or more inflection points. For all of these reasons, it has proved very difficult to produce apparatus for the purpose of this invention, capable of being manufactured in series production, becauxe if such an apparatus would be adapted for a given building, it would not be adapted for another one and so on. In addition hereto, any such apparatus would be very complicated and as a consequence thereof very expensive.

The present invention is based upon an investigation of the character of all of the factors which are known to cause a change of interior temperature $t_i$. Thereby, it was found that it is not well possible to carry through the control of the interior temperature by direct methods, which would mean sensing the interior temperature and simply to add heat, if it proves, that this sensed interior temperature is lower than the desired reference temperature $t_r$, and *vice versa*. Instead, the control of the interior temperature should take place practically exclusively on basis of the outdoor conditions, in first place on basis of the outdoor temperature. But, of course, the run of the compensation for a deviation of interior temperature from the desired one or the reference temperature should be stopped, when the sensor for the interior temperature shows that it has got the desired value or with other words the value indicated by the reference temperature, applicable to the existing period of time during the day.

It has also been found that the factors causing a change of the interior temperature $t_i$ may be divided up into different categories, viz. the quickly variable ones and the only slowly variable ones. To the first mentioned ones, thus, count accidental changes of interior temperature $t_i$ induced by some of the above mentioned circumstances, which may be individual to one or more but not to all of the flats in a multi family house. To the latter ones, however, count variations of interior temperature, caused by outdoor climatic conditions, especially the outdoor air temperature $t_u$.

Further it has proved in said investigations, that once the control takes place on basis of the outdoor conditions, the said control will easily be incorrect, if there are short duration variations of the interior temperature of the category first mentioned above and, for this reason, such variations where they may perhaps appear, have to be smoothed out in order not to make the control erroneous. How perfect this smoothing out of the short duration variations of the interior temperature should be carried on, will, of course, be dependent upon the demands on constancy of temperature in each separate case.

The invention is based upon the principle that one must first, as far as possible find out, if there is a risk for such short durations variations of interior temperature as mentioned above. If there is no such risk, the control may take place according to the principle explained below, but if there is such a risk, these accidental short duration variations of the interior temperature should be smoothed out. In both cases, the corrections means temperature $t_w$ should be controlled on basis of the outdoor temperature $t_u$ perhaps other outdoor climatic circumstances, and on basis of the reference temperature $t_r$.

Second, the graph symbolizing the relation between the interior temperature $t_i$ and the outdoor temperature $t_u$ should be divided up into zones, each of which comprising only part of said graph and each such zone part should be replaced by a curve of simpler character, preferably a straight line.

It will be understood from the above, that each of these two control steps will be important and have its advantages, but that there is, nevertheless a connection between them. The dividing up of the functional curve will be useful in such cases, were there is no risk for short duration variations in the interior temperature, but if there is such a risk, the advantage of the dividing up of said curve into zones will be of little or no use, unless the short duration variations are smoothed out. On the other side, the smoothing out of the said short duration variations will be of no use or only of very little use in systems, in which the reverting of the bent curve into zones of a simple character, preferably straight line character is not used.

Therefore, the dividing up into zones will be useful in many a case but not in all cases even if no smoothing out of the short duration variations takes place, but the smoothing out of the short duration variations will have no sense unless in connection with an arrangement for simplifying the control by dividing the control curve up into zones of a simple shape, such as a straight line.

The main advantage of dividing the control curve up into zones and replacing each such zone part of the curve by a simpler one, is in first place that you may produce the control arrangement in series production, incorporating in same some easily adjustable or replaceable element, such as a resistor by means of which you may adapt the series manufactured apparatus to the specific conditions of each separate building.

A temperature control arrangement according to the preamble of claim 1 is known, e.g. from DE—A1—33 28 189 or from DE—A1—33 28 190. Moreover, the replacement of a curved graph by a series of a plurality of straight lines for this purpose is known from DD—A—0 152 617.

Thus, the present invention regards a temperature control arrangement for such heating systems which have for their purpose to heat localities with the intention to keep the temperature in the locality at or close to a pre-determined value, heat being continuously fed by means of a heat carrier means to heat producers situated in the locality with an intensity, controllable for instance by means of the temperature of the heat transfer medium, thereby sensing at least the temperature in the locality and the outdoor temperature.

According to the invention a functional relation known in advance is fed over a first channel to a function controller. This functional relation applies to the outdoor temperature and to the correction means temperature and is obtained from a function selector. Over a second channel an expression for the outdoor temperature is fed to same function controller. The functional relation between the outdoor temperature and the correction means temperature is divided up, within a zone selector, into zones limited from each other dependent upon the difference between the reference temperature $t_r$ and the interior temperature $t_i$. The correction means temperature $t_w$ is determined on basis of the said functional relation. The correction of the interior temperature $t_i$ in the locality is created by correction means of the said temperature $t_w$. A sensing takes place for stipulating the difference between the reference temperature $t_r$ and the interior temperature $t_i$ in order that, when said temperatures are equal shall the run of correction stop.

The latter means, that the heat carrier means are still running but the temperature of the correction means will not be changed until there is again a difference between the interior temperature $t_i$ and the reference temperature $t_r$.

Further details of this invention will be apparent from the following description.

Preferably, the division into zones will take place in such a way, that the function indicating curve will, within each zone appear rather close to a straight line so that said part of the curve may be replaced by a straight line. A straight line is the shape of a curve, which is the simplest possible one and also the one which is most easy to imitate by mechanical or electric or electronic means.

The invention will be further described below in connection with a chosen embodiment, which is shown in the attached drawings, but it is understood that the invention shall not be limited to said specific embodiment but that all different modifications may exist within the scope of the invention.

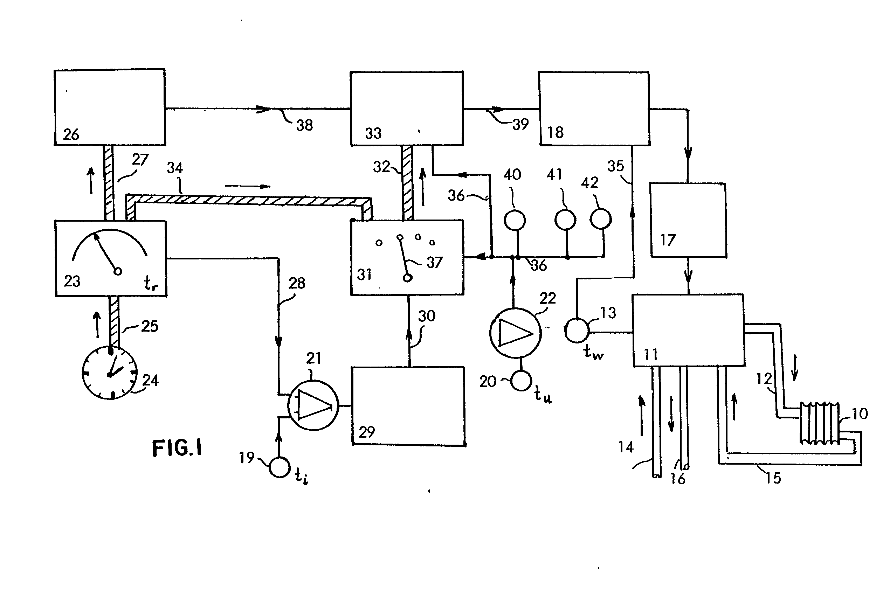

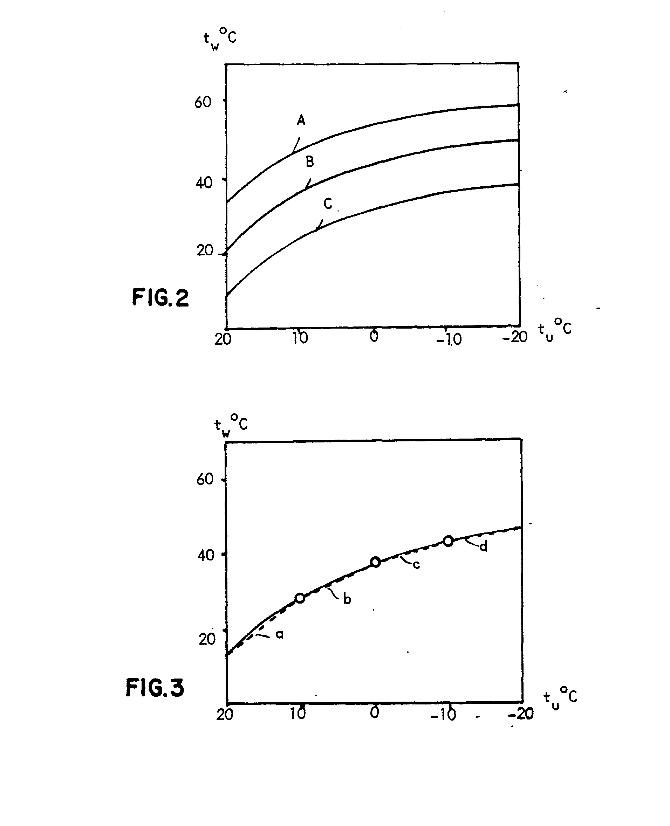

In the drawings, Fig. 1, in block diagram, shows an example of this invention, whereas Figs. 2 and 3 show some graphs, below referred to as curves for the explanation of the function of some of the parts presented in Fig. 1. It should be observed that these parts are to some extent formed by commercially available electronic coupling units or by conventional arrangements for heat control and in other parts by means which shall, on basis of principles well known to the man skilled in art revert an operation varying according to a given mathematical function into an operation deviating therefrom.

In the arrangement according to Fig. 1, one single heat radiator 10 is shown, which may be regarded to represent all of the battery of heat radiators, causing the heating of the building. This battery of heat radiators is fed with warm water of the temperature $t_w$ from a shunt valve 11 over a conduit 12. The shunt valve 11 or perhaps the feeder conduit running from the shunt valve 11 comprises a sensor 13 for indication of the temperature $t_w$ of the warm water. The shunt valve receives hot water through a conduit 14 from a boiler, a heat exchanger or the like, not shown in the drawing, and also water which has been cooled down, from the return conduit 15 from the battery 10 of heat radiators. Surplus of return water is conducted back through the conduit 16 to the source of hot water in order to be heated anew.

The heating arrangement with shunt valve and battery of heat radiators only forms one example of a heater system for the said locality, and the invention may with equal advantage be used in other heating systems, such as electric heater systems and so on.

It was assumed, in the shown embodiment of the invention, that the shunt valve 11 was adjustable by means of an electric motor 17, which may be brought to move to or fro for adjustment of the shunt valve 11. Therefore, through the shunt valve 11, warm water of the temperature $t_w$ will pass continuously to the heat radiators 10, and the control of the heat given off from the heat radiators 10 will exclusively take place by change of the temperature $t_w$ of the warm water, which will, thus, in the present case serve as the correction means.

The movement of the electric motor 17 is controlled from the motor controller 18, which may, in its simplest form comprise a set, known per se, of attraction and release relays.

The interior temperature $t_i$ is sensed in some suitable way by means of a temperature sensor 19, which may be a thermistor, and the outdoor temperature $t_u$, is sensed by another temperature sensor 20 which may also be a thermistor. All such sensors 19, 20 have a very weak output voltage or current and, therefore, this has to pass an amplifier, for instance a transistor amplifier or an electronic tube amplifier 21 and 22, respectively. It is assumed in the shown embodiment that the amplifier 21 is of the type controlled by two input voltages in order to transmit in its output circuit a mathematical function of them, preferably the difference between them, whereas the amplifier 22 may be a conventional one way amplifier.

The reference temperature $t_r$ is adjustable in a reference temperature indicator 23. This may be automatically or manually adjustable. It is assumed, in the shown embodiment, that one may indicate in this reference temperature indicator a number of different reference temperatures $t_r$, one acting during day time, one acting during night hours and perhaps one or two further ones acting during morning and/or evening time. In some buildings, such as factories and the like, where no people are living during the weekends, one or more further temperatures may act during said periods of time.

The choice between these different reference temperatures is made by means of a control timer 24 which, over the multiple conduit 25 controls the reference temperature indicator 23 such that it will indicate the specific reference temperature $t_r$ applicable to each separate part of the twenty four hours or the week, respectively.

A function selector 26 is arranged in such a way that it will choose a given one of the functions accumulated therein. Said functions represent the relation between the correction means temperature $t_w$ and the outdoor temperature $t_u$. This is the mathematical relation mentioned above, which has to be known in advance, and which may be found by calculations but still better in empirical way. The said function is accumulated in the function selector 26 using electronic units of known character. The function selector 26 may operate in steps or continuously. The function accumulated in the function selector, consequently, would also be possible to express in the shape of a curve or graph, which indicates, along its horizontal axis, one of the magnitudes, e.g. the outdoor temperature $t_u$, and along its vertical axis the other magnitude, in the present case, thus, the correction means temperature, which is in the present case the warm water temperature $t_w$, said warm water being fed to the heat radiators 10.

In Fig. 2, as an example, there are shown three such curves, indicating the function and accumulated in the function selector 26. They indicate, along their horizontal axis the outdoor temperature $t_u$ and along the vertical axis the correction means temperature $t_w$, which is, in the embodiment now described the temperature of the warm water, which has to be fed to the heat radiators 10 in order to compensate in the best possible way, and especially in the most economical way for any difference in temperature $t_i$ in the interior of the heat controlled space and the wanted interior temperature $t_r$ regarding the existing outdoor temperature $t_u$. From the three curves shown in Fig. 2, for instance the curve B may indicate the function during day time control and the curve C the function during night hour control, whereas the curve A shows the function during morning control when one wants to obtain a quick increase of temperature from the night hour temperature to the higher day time temperature.

Of course, the curves A, B and C are individual to each specific building. The curve B, however, regards the result of measurements in a practical case. Investigations were made for a lot of buildings of rather different character, and these investigations have proved, that the curves for different buildings have the same general shape as the curve B of Fig. 2. Assuming the curve B to be the standard curve, then, accidental cooling this curve may be displaced upwardly into the vicinity of curve A and at an accidental heating it may be displaced downwardly into the vicinity of curve C without any essential change of the general shape of the curve.

The choice of the curve A or B or C to be used for determining the function of the arrangement takes place from the reference temperature indicator 23 over the multiple conduit 27.

From the reference temperature indicator 23 a conductor 28 runs to the amplifier 21 so that there will exist in its output circuit a voltage forming a mathematical function of the reference temperature $t_r$ and the internal temperature $t_i$, preferably the algebraic difference between said two temperatures. Due to such disturbances as mentioned above, however, the internal temperature $t_i$ may be provided with superimposed variations both in a direction upwardly and in a direction downwardly.

It must be regarded unsuitable that such variations, which will usually depend upon circumstances in one single flat in a multy family house shall be allowed to influence the temperature in other flats within the same house. Therefore, these variations should be suppressed. Now, it has been observed that such irregularities are always of a very short duration as compared with variations of the climatic conditions such as the outdoor temperature and also as compared with variations in the interior temperature $t_i$, which are slowly varying, because they are dependent upon conditions common to all of the building and all of its flats such as the outdoor temperature $t_u$. The last mentioned variations may often have a period of constancy between any change of twenty four hours or even more.

For that reason, the voltage given off from the amplifier 21 is conducted to a device 29 for providing slow action or time delay which causes an equalization or smoothing out of the voltage from the amplifier 21 to take place so that accidental variations of short duration of the voltage transferred will be suppressed whereas the mean value of $t_r - t_i$ during a longer period of time will remain. The indication of this value will be transferred over the conductor 30 to a zone selector 31.

The variation proper on basis of the function which has been selected in the zone selector 31 is determined by the outdoor temperature $t_u$, transferred from the sensor 20 and the amplifier 22 over the conductor 36, but a correction of this function may take place in a way mentioned below under influence of the difference of temperature $t_r - t_i$. The function concerned, thus symbolically, may be represented by means of a curve comprising along its horizontal axis the outdoor temperature $t_u$ and along its vertical axis the correction means temperature $t_w$. This curve, of course, will scarcely exist in reality but it simply represents a function which is created in data technical way in the function selector 26.

The result thus created in the zone selector 31 which will, thus, depend upon the outdoor temperature $t_u$, is transferred over the multiple conductor 32 to a function controller 33. The curve representing in this way the said function in the function controller 33 is found in Fig. 3.

The horizontal axis indicates the outdoor temperature $t_u$, and along the vertical axis the temperature is plotted which is assumed in the best possible way to cause correction of this erroneous interior temperature $t_i$. It is known by experience that such a curve is bent in about the same way as shown in Fig. 3, but, of course, it is individual for each separate building and the curve shown in Fig. 3, therefore, must only be regarded an example of a curve which may satisfy the demands of the specific case.

Regarding the inavoidable variations in the shape of the curve in Fig. 3. this curve is not exceptionally exact. Therefore, it may be justified to replace it by a number of consecutive straight lines a, b, c and d of mutually different slope and indicated by dotted lines in Fig. 3. Each such line, therefore, is said to be within one control zone, which means in reality that the variation of temperature $t_w$ which should take place at a given variation of the outdoor temperature $t_u$ is divided up into a corresponding number of zones. One of these control zones is chosen by means of the zone selector 31. A certain correction of the situation of the transit points between the different zones a, b, c and d takes place by the said difference of temperature $t_r - t_i$, however not until this difference of temperature has been smoothed out in the time delay device 29 in order to remove accidental irregularities. The control zone thus chosen, therefore, is found in the function controller 33, which receives for its operation through the conductor 36 a voltage, corresponding to the outdoor temperature $t_u$. Its output voltage is transferred to the motor controller 18 for controlling the motor 17, when adjusting the setting of the shunt valve 11.

The advantage of this arrangement is, in addition to avoiding the influence of disturbances of the type mentioned above, that the control will be essentially easier and simpler, still maintaining the desired accuracy, because the control takes place under use of control curves which are straight lines but nevertheless follow the bent curve with only very small deviations.

The curve shown in Fig. 3, thus, only is one of a plurality of curves, which exist in Fig. 2 or would exist in a corresponding figure, more exactly the curve which will to a higher degree than any other one be suited for the temporary state of day time control or night hour control and so on. It has been assumed in the shown example, that the curve may with satisfactory approximation be divided up into four zones, each being replaced by a straight line. The choice of the zone to be used, thus, is dependent upon the value of the outdoor temperature $t_u$.

Further, however, an indication is also transferred over these multiple conduit 34 for indicating the setting applicable to the reference temperature indicator 23 during the part concerned of the twenty four hours. In this way, therefore, the zone selector 31 will be influenced by a multitude of different factors, viz. over the conductor 30 by a composed voltage determined by the reference temperature $t_r$ and the internal temperature $t_i$, preferably the difference $t_r - t_i$ between the two temperatures, further over the conductor 34 by a voltage indicating the part of ths twenty four hours during which the control is effected, and, finally, over the conductor 36 by a voltage indicating the outdoor temperature $t_u$ such as this has been sensed by means of the temperature sensor 20 and after due amplification in the amplifier 22.

From the sensor 13 for the correction means temperature $t_w$ a conduit 35 runs to the motor controller 18 for starting the motor 17 and/or adjusting its position in the way mentioned below, or to stop said motor.

The arrangement now described works in the following way:

At, for instance, decreasing interior temperature $t_i$, sensed by means of the sensor 19, a voltage indicating this decrease of temperature is fed to the amplifier 21, simultaneously as same amplifier receives a voltage over the conductor 28 indicating the reference temperature $t_r$. The amplifier 21, therefore, will comprise in its output conduit a voltage forming a mathematical function of the two temperatures, preferably the difference between them or $t_r - t_i$. It is reminded about that the reference temperature represents the desired interior temperature and that the said difference of temperature represents the error of temperature in the locality.

The reference temperature $t_r$, already, has been adjusted by influence from the control timer 24 to the value which one desires to maintain in the locality during the part of the twenty four hours just running. This temperature, thus, usually, is higher during day time and lower during night hours.

By influence from the slow acton providing time delay device 29 there will, in the output conduit 30, only appear a smoothed out value of the temperature error $t_r - t_i$. The superimposed variations of short duration have found their reason in distrubances of the interior temperature $t_i$.

The indication voltage from the sensor 20 for

the outdoor temperature $t_u$ is after amplification in the amplifier 22 fed over the conductor 36 for the function selector 31 for determination of the zone within which the control shall take place. In the drawing this is symbolically represented by means of a switch arm 37 and four contacts each of which representing one zone, which may be selected.

Thus, it should be observed that the function is derived from the function selector 26, that it is divided up into a number of zones dependent upon the outdoor temperature, and that the zone concerned is derived from the zone selector 31, and, finally, that the function will, within this zone, have been modified into a simpler form, preferably a form which may be represented by means of a straight line in a graph, said straight line running between the end points of the part of the curve within each zone, said end points being indicated by means of the zone selector.

There are some cases for instance in factories, store buildings and the like, where one wants to keep a constant temperature but where there is no risk for such quick changes of temperature, and, in such a case, it is also not necessary to arrange for a smoothing out of such quick changes of temperature for the simple reason that there are no such changes. In most cases, however, such quick changes of temperature will exist, and if they are not smoothed out in the way, described above, the advantage of the division of the function graph into zones will not apply at all or only apply to a limited extent.

The primary part of the present invention, therefore, comprises the arrangements for dividing up the function graph between the outdoor temperature $t_u$ and the correction means temperature $t_w$ into zones dependent upon the outdoor temperature and activating the control within each such zone by simplified means, preferably by means acting according to a linear function or a first degree curve, but if quick variations of temperature of the type mentioned are feared, then the arrangement has to be provided with a device for smoothing out such quick and short duration variations of the interior temperature. This will, in first place, be in living flat houses.

In the reference temperature indicator 23, a reference temperature $t_r$ has been chosen by means of the control timer 24, said temperature representing the interior temperature $t_i$ just now wanted. Under influence of the signal transmitted through the multiple conduit 27, therefore, the function is selected in the function selector 26 which corresponds to the chosen reference temperature $t_r$ as indicated in Fig. 2 and this function is transferred to the function controller 33 over the conductor 38. In the function controller 33 a calculation is effected, and the result thereof is fed, over the conductor 39 and the motor controller 18, to the motor 17 for starting same in such a direction that the existing temperature error will be decreased. In the motor controller 18, the indications from the sensor 13 for the correction means temperature $t_w$ is compared with the input indication over the conductor 39 for the result of the calculation in the function controller 33 so that the motor 17 will be stopped when a suitable correction means temperature $t_w$ has been obtained.

When there is no longer any temperature error $t_r-t_i$, said state being observed by the internal temperature $t_i$ being equal to the chosen reference temperature $t_r$, no signal will be transmitted from the amplifier 21 to the time delay device 29, and, consequently, no signal will be transferred over the conductor 30 to the zone selector 31 or over the conductor 32 to the function controller 33, respectively.

Above, amongst the circumstances influencing the temperature in the locality regard has only been taken to the outdoor temperature $t_u$ sensed by means of the temperature sensor 20. The interior temperature $t_i$ has no direct influence on the procedure of control, but there will be an indirect influence by said temperature being also one of the two circumstances, from which the temperature error $t_r-t_i$ is derived, and, thus, the interior temperature will participate the finding of the correct zone used in connection with the function controller 33.

In more advanced systems according to the invention, it is suitable, in addition to the outdoor temperature $t_u$ also to introduce correction factors for other climatic circumstances such as wind pressure, sun shine, moisture in the surrounding atmosphere and so on. This is well known in the art. Indications for such circumstances, suitably, may be introduced after collection from separate sensors 40, 41, 42 and so on, the outputs of which are introduced into the zone selector 31 or into any other suitable part of the system.

Above the system according to the invention has been described as if it would be used in a multi family house, and it is also in connection with such houses that the invention has its greatest importance. Probably, it would be too complicated and expensive for use in small one family houses such as villa buildings and the like but the advantages of the system according to the present invention, nevertheless, are so dominating that the system may suitably be used also in larger one family houses. Therefore, the invention shall not be limited to use only in multi family houses.

**Claims**

1. Temperature control arrangement for heating systems of the kind, which heat localities for the purpose of keeping the temperature ($t_i$) in the locality at or close to a pre-determined value ($t_r$), below referred to as "the reference temperature", heat being continuously fed by means of heat transmitting means (10) placed in the locality, said transmittance of heat having an intensity controllable by means of the temperature of heat transfer medium, the temperature ($t_w$) of which below being referred to as "the correction means temperature", whereby the indoor temperature $(t_i)$ and the outdoor temperature $(t_u)$ are sensed and a function controller (33) is fed over a first channel (38) with information about a functional relation, known in advance, between the outdoor temperature $(t_u)$ and the correction means temperature $(t_w)$ and over a second channel (36) with an expression for the outdoor temperature $(t_u)$, said functional relation being divided upon into zones (a, b, c, d), in a graph represented by straight lines, and the correction means temperature $(t_w)$ being determined on basis of said functional relation characterized in that the said zones (a, b, c, d) are limited from each other dependent upon the difference between the indoor temperature $(t_i)$ and the reference temperature $(t_r)$, an expression for said difference being fed to a zone selector (31) for correction of the limit value of the functional zone (a, b, c, d) to be used in each separate case, and that the difference between the reference temperature $(t_r)$ and the indoor temperature $(t_i)$ is sensed, means being provided to stop the run of change of the correction means temperature $(t_w)$ when the said two temperatures $(t_i$ and $t_r)$ are equal.

2. Temperature control arrangement according to claim 1, characterized in that an expression for the reference temperature $(t_r)$ is fed from the reference temperature indicator (23) to an amplifier (21) having two inputs, to the other input of which an expression for the indoor temperature $(t_i)$ is fed in order of creating, within said amplifier, an expression for the error of temperature $(t_r-t_i)$, said last mentioned expression being fed to the zone selector (31) for effecting the choice of the zone (a, b, c, d), within which the control has to take place.

3. Temperature control arrangement according to claim 2, characterized in that the expression for the temperature error $(t_r-t_i)$ is fed to the zone selector (31) over a slow acting time delay device (29) in order to supress accidental short duration variations of the indoor temperature $(t_i)$.

4. Temperature control arrangement according to any of the above claims, characterized in that the correction means temperature $(t_w)$ is sensed by a means (13), the indication of which is fed to a motor controller (18) for a motor (17), which is arranged to adjust a shunt valve (11) for mixing warm water and cold water in order to provide water of the correction means temperature $(t_w)$ such that when the motor (17) runs in one direction the correction means temperature $(t_r)$ will increase, and when the motor (17) runs in the other direction said temperature will decrease.

5. Temperature control arrangement according to any of the above claims, characterized in that the reference temperature indicator (23) is arranged to indicate a plurality of different reference temperatures $(t_r)$ to act within different periods of time, and that the change of such reference temperature $(t_r)$ is accumulated within the reference temperature indicator (23) on basis of indications from a control timer (24).

6. Temperature control arrangement according to claim 4 or 5, characterized in that the function selector (26) is adapted for storing information about the reference temperature $(t_r)$ and the zones (a, b, c, d) applicable to different correction means temperatures $(t_w)$ dependent upon the outdoor temperature $(t_u)$ under control from the reference temperature indicator (23) in order to chose a zone (a, b, c, d) or function (A, B, C), respectively, for each period of time e.g. daytime, night hours and so on.

7. Temperature control arrangement according to claim 6, characterized in that information about the functional relation between the outdoor temperature $(t_u)$ and the correction means temperature $(t_w)$ stored in the function selector (26) and applicable to the chosen range of values of the reference temperature $(t_r)$ is transferred from the function selector (26) to the function controller (33).

## Patentansprüche

1. Temperaturreguliervorrichtung für Heizanlagen solcher Art, welche Räumlichkeiten heizen, um die Temperaturen $(t_i)$ in diesen auf oder nahe einem vorbestimmten Wert $(t_r)$ zu halten, welcher im folgenden als "Referenztemperatur" bezeichnet ist, wobei Wärme kontinuierlich zugeführt wird mittels in den Räumlichkeiten angeordneten Heizmitteln (10), wobei die Intensität der Wärmezufuhr durch die Temperatur $(t_w)$ des wärmeübertragenden Mediums regulierbar ist, welche nachstehend als "Korrekturmitteltemperatur" bezeichnet ist, wobei die Innentemperatur $(t_i)$ und die Aussentemperatur $(t_u)$ ermittelt werden und einem Funktionsregulator (32) über einen ersten Kanal (38) Information zugeführt wird über ein vorbekanntes Funktionsverhältnis zwischen der Aussentemperatur $(t_u)$ und der Korrekturmitteltemperatur $(t_w)$ und über einen zweiten Kanal (36) mit einem Ausdruck für die Aussentemperatur $(t_u)$, wobei das Funtionsverhältnis aufgeteilt ist, in Zonen (a, b, c, d) welche in einem Diagramm durch gerade Linien dargestellt sind, und die Korrekturmitteltemperatur $(t_w)$ auf der Basis genannten Funktionsverhältnisses ermittelt wird, dadurch gekennzeichnet, dass die genannten Zonen (a, b, c, d) voneinander abgegrenzt sind in Abhängigkeit von dem Unterschied zwischen der Innentemperatur $(t_i)$ und der Referenztemperatur $(t_r)$, dass ein Audruck für genannten Unterschied einem Zonenwähler (31) für die Korrektur des Grenzwertes der Funktionszone (a, b, c, d) für die Anwendung in jedem einzelnen Falle zuführbar ist, und dass der Unterschied zwischen der Referenztemperatur $(t_r)$ und der Innentemperatur $(t_i)$ abgefühlt wird, wobei Mittel vorgesehen sind, um den Fortlauf des Wechsel der Korrekturmitteltemperatur $(t_w)$ zu unterbrechen, wenn die genannten beiden Temperaturen $(t_i)$ und $(t_r)$ gleich sind.

2. Temperaturreguliervorrichtung gemäss Anspruch 1, dadurch gekennzeichnet, dass ein Ausdruck für die Referenztemperatur $(t_r)$ vom Referenztemperaturindikator (23) einem Verstärker mit zwei Eingängen zugeführt wird, zu dessen anderem Eingang ein Ausdruck für die Innentemperatur ($t_i$) zugeführt wird, um in genanntem Verstärker einen Ausdruck für den Temperaturfehler ($t_r-t_i$) zu schaffen, und dass der letztgenannte Ausdruck dem Zonenwähler (31) zugeführt wird, um die Wahl der Zone (a, b, c, d) zu bewirken, in welcher die Regulierung durchzuführen ist.

3. Temperaturreguliervorrichtung nach Anspruch 2, dadurch gekennzeichnet, dass der Ausdruck fur den Temperaturfehler ($t_r-t_i$) dem Zonenwähler (31) zugeführt wird über eine langsam wirkende Zeitverzögerungsvorrichtung (29), um mögliche kurzzeitige Änderungen der Innentemperatur ($t_i$) zu unterdrücken.

4. Temperaturreguliervorrichtung nach einem der vorhergehenden Ansprüche, dadurch gekennzeichnet, dass die Korrekturmitteltemperatur ($t_w$) abgefühlt wird über ein Mittel (13), die Anzeige vom welchem einem Motorregulator (18) für einen Motor (17) zugeführt wird, welcher dazu vorgeshene ist, ein Nebenschlussventil (11) zum Mischen von Heizwasser und Kaltwasser zu regulieren, um Wasser der Korrekturmitteltemperatur ($t_w$) vorzusehen, derart, dass wenn der Motor (17) in eine Richtung wirkt, die Korrekturmitteltemperatur ($t_r$) ansteigt, und, wenn der Motor (17) in die andere Richtung wirkt, genannte Temperatur sinkt.

5. Temperaturreguliervorrichtung nach einem der vorhergehenden Ansprüche, dadurch gekennzeichnet, dass der Referenztemperaturanzeiger (23) dazu vorgesehen ist, eine Vielzahl von verschiedenen Referenztemperaturen ($t_r$) zum Wirken in verschiedenen Zeitabschnitten anzuzeigen, und dass der Wechsel einer solchen Referenztemperatur ($t_r$) innerhalb des Referenztemperaturanzeigers (23) auf der Basis von Anzeigen von einer Kontrolluhr (24) akkumuliert ist.

6. Temperaturreguliervorrichtung nach Anspruch 4 oder 5, dadurch gekennzeichnet, dass der Funktionswähler (26) eingerichtet ist zum Lagern von Information über die Referenztempertur ($t_r$) und die Zonen (a, b, c, d) anwendbar für unterschiedliche Korrekturmitteltemperaturen ($t_w$) in Abhängigkeit von der Aussentemperatur ($t_u$) unter Regulierung durch den Referenztemperaturanzeiger (23), um eine Zone (a, b, c, d) bzw. eine Funktion (A, B, C) für jede Zeitperiode zu wählen, zum Beispiel Tagzeit, Nachstunden usw.

7. Temperaturreguliervorrichtung nach Anspruch 6, dadurch gekennzeichnet, dass Information über das Funktionsverhältnis zwischen der Aussentemperatur ($t_u$) und der Korrekturmitteltemperatur ($t_w$), welche im Funktionswähler (26) gelagert ist und auf den gewählten Umfang der Referenztemperaturwerte ($t_r$) anwendbar ist, von dem Funktionswähler (26) an den Funktionsregulator (33) überführt wird.

### Revendications

1. Dispositif de régulation de température pour des systèmes de chauffage du type chauffant des localités dans le but de maintenir la température ($t_i$) dans la localité à ou près d'une valeur prédéterminée ($t_r$), dénommée ci-dessous "la température de référence", de la chaleur étant amenée continuellement par un moyen de transmission de chaleur (10) placé dans la localité, ladite transmission de chaleur ayant une intensité réglable au moyen de la température d'un milieu caloporteur, dont la température ($t_w$) est dénommée ci-dessous "la température du moyen de correction", la température intérieure ($t_i$) et la température extérieure ($t_u$) étant détectées et un régulateur de fonction (33) recevant par un premier canal (38) une information concernant une relation fonctionnelle, connue d'avance, entre la température extérieure ($t_u$) et la température du moyen de correction ($t_w$) et par un second canal (36) une expression pour la température extérieure ($t_u$), ladite relation fonctionnelle étant divisée en zones (a, b, c, d) dans un graphe représenté par des lignes droites, et la température du moyen de correction ($t_w$) étant déterminée sur la base de ladite relation fonctionnelle, caractérisé en ce que lesdites zones (a, b, c, d) sont limitées les unes par rapport aux autres en fonction de la différence entre la température intérieure ($t_i$) et la température de référence ($t_r$), une expression pour ladite différence étant introduite dans un sélecteur de zone (31) en vue de la correction de la valeur limite de la zone fonctionnelle (a, b, c, d) à utiliser dans chaque cas séparé, et en ce que la différence entre la température de référence ($t_r$) et la température intérieure ($t_i$) est détectée, des moyens est prévus pour arrêter l'opération de modification de la température du moyen de correction ($t_w$) lorsque lesdites deux températures ($t_i$) et ($t_r$) sont égales.

2. Dispositif de régulation de température selon la revendication 1, caractérisé en ce qu'une expression pour la température de référence ($t_r$) est amenée de l'indicateur de température de référence (23) à un amplificateur (21) comportant deux entrées, l'autre entrée de celui-ci recevant une expression pour la température intérieure ($t_i$) afin de créer, à l'intérieur dudit amplificateur, une expression pour l'erreur de température ($t_r-t_i$), ladite expression mentionnée en dernier lieu étant introduite dans le sélecteur de zone (31) pour effectuer le choix de la zone (a, b, c, d) à l'intérieur de laquelle la régulation doit avoir lieu.

3. Dispositif de régulation de température selon la revendication 2 caractérisé en ce que l'expression pour l'erreur de température ($t_r-t_i$) est introduite dans le sélecteur de zone (31) par l'intermédiaire d'un dispositif temporisateur (29) à action lente afin de supprimer les variations de courte durée accidentelles de la température intérieure ($t_i$).

4. Dispositif de régulation de température selon l'une des revendications précédentes, caractérisé en ce que la température du moyen de correction ($t_w$) est captée par un moyen (13) dont l'indication est introduite dans un régulateur de moteur (18) pour un moteur (17), qui est conçu pour régler une vanne de dérivation (11) de façon à mélanger de l'eau chaude et de l'eau froide afin de fournir de l'eau à la température du moyen de correction ($t_w$) de telle façon que lorsque le moteur (17) tourne dans une direction, la température du moyen de correction ($t_r$) augmente, et que lorsque le moteur (17) tourne dans l'autre direction, ladite température diminue.

5. Dispositif de régulation de température selon l'une des revendications précédentes, caractérisé en ce que l'indicateur de température de référence (23) est conçu pour indiquer une pluralité de température de référence différentes ($t_r$) destinées à agir à l'intérieur de périodes de temps différentes et en ce que la modification d'une telle température de référence ($t_r$) est accumulée à l'intérieur de l'indicateur de température de référence (23) sur la base d'indications provenant d'un rythmeur de régulation (24).

6. Dispositif de régulation de température selon la revendication 4 ou la revendication 5, caractérisé en ce que le sélecteur de fonction (26) est conçu pour stocker une information concernant la température de référence ($t_r$) et les zones (a, b, c, d) aplicables à différentes températures du moyen de correction ($t_w$) en fonction de la température extérueure ($t_u$) sous le contrôle de l'indicateur de température de référence (23) afin de choisir une zone (a, b, c, d) ou une fonction (A, B, C, D) respectivement, pour chaque période de temps, par exemple le jour, les heures de nuit etc.

7. Dispositif de régulation de température selon la revendication 6, caractérisé en ce que l'information concernant la relation fonctionnelle entre la température extérieure ($t_u$) et la température du moyen de correction ($t_w$) stockés dans le sélecteur de fonction (26) et applicable au domaine choisi de valeurs de la température de référence ($t_r$) est transférée du sélecteur de fonction (26) au régulateur de fonction (33).

FIG.1

1

FIG.2

FIG.3